# EUROPÄISCHE PATENTSCHRIFT

(11) **EP 3 951 160 B1**
(45) Veröffentlichungstag und Bekanntmachung des Hinweises auf die Patenterteilung: **12.07.2023**
(21) Anmeldenummer: 21185066.4
(22) Anmeldetag: 12.07.2021
(51) Int. Cl.: F02M 43/04, F02M 47/02

(54) **BRENNSTOFFEINSPRITZVENTIL UND BRENNSTOFFEINSPRITZVERFAHREN FÜR EINEN GROSSDIESELMOTOR, SOWIE GROSSDIESELMOTOR**
LARGE DIESEL ENGINE AND FUEL INJECTION VALVE AND FUEL INJECTION METHOD FOR A LARGE DIESEL ENGINE
SOUPAPE D'INJECTION DE CARBURANT ET PROCÉDÉ D'INJECTION DE CARBURANT POUR UN GROS MOTEUR DIESEL, AINSI QUE GROS MOTEUR DIESEL

(30) Priorität: 04.08.2020 EP 20189462
(43) Veröffentlichungstag der Anmeldung: 09.02.2022
(73) Patentinhaber: Winterthur Gas & Diesel AG, 8401 Winterthur (CH)
(72) Erfinder: Yildirim, Turhan, 8408 Winterthur (CH)
(74) Vertreter: IPS Irsch AG

(56) Entgegenhaltungen:
- EP-A1- 2 079 922
- FR-A1- 2 935 025
- US-A1- 2009 230 220
- US-A1- 2011 139 906

## Beschreibung

Die Erfindung betrifft ein Brennstoffeinspritzventil für einen Grossdieselmotor sowie einen Grossdieselmotor gemäss dem Oberbegriff des unabhängigen Patentanspruchs der jeweiligen Kategorie.

Grossdieselmotoren, wie beispielsweise längsgespülte Zweitakt-Grossdieselmotoren, werden häufig als Antriebsaggregate für Schiffe oder auch im stationären Betrieb, z.B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit den Betriebsstoffen zentrale Kriterien. Grossdieselmotoren haben typischerweise Zylinder, deren Innendurchmesser (Bohrung) mindestens 200 mm beträgt. Heutzutage werden Grossdieselmotoren mit einer Bohrung von bis zu 960 mm oder sogar noch mehr eingesetzt.

Seit einigen Jahren ist auch mit zunehmender Bedeutung die Qualität der Abgase ein wesentlicher Aspekt. Das hat insbesondere bei Zweitakt-Grossdieselmotoren zur Folge, dass die Verbrennung des klassischen, mit Schadstoffen hoch belasteten Schweröls, aber auch die Verbrennung von Dieselöl oder anderen Brennstoffen problematischer wird, weil die Einhaltung der Abgasgrenzwerte immer schwieriger, technisch aufwändiger und damit teurer wird oder die Einhaltung der Grenzwerte wirtschaftlich nicht mehr sinnvoll möglich ist.

In der Praxis besteht daher bereits seit langem das Bedürfnis nach Motoren, die mit mindestens zwei verschiedenen Brennstoffen betrieben werden können. Dabei kann es sich beispielsweise um zwei verschiedene flüssige Brennstoffe handeln oder auch um einen flüssigen Brennstoff und einen gasförmigen Brennstoff. Solche Motoren werden üblicherweise als Multi-Fuel-Motoren bezeichnet und können während des Betriebs von einem Brennstoff auf einen anderen Brennstoff umgeschaltet werden. Bekannte flüssige oder gasförmige Brennstoffe, die alternativ in einem Multi-Fuel-Grossdieselmotor verbrannt werden können, umfassen neben Schweröl, Marinediesel und Diesel insbesondere Alkohole wie Methanol oder Ethanol, Erdgase (im flüssigen oder gasförmigen Zustand) oder Emulsionen oder Suspensionen.

Als ein Beispiel seien hier die als MSAR (Multiphase Superfine Atomised Residue) bezeichneten Emulsionen genannt. Dies sind im Wesentlichen Emulsionen aus einem schweren Kohlenwasserstoff, z. B. Bitumen, Schweröl oder ähnliches, und Wasser, die in speziellen Verfahren hergestellt werden. Ein weiteres Beispiel sind Suspensionen, z. B. aus Kohlenstaub und Wasser, die ebenfalls als Brennstoff für Grossdieselmotoren eingesetzt werden.

Ein spezieller Typ eines Multi-Fuel-Motors ist der üblicherweise als "Dual-Fuel Motor" bezeichnete Motor, der mit zwei unterschiedlichen Brennstoffen betrieben werden kann. In einem Gasmodus wird ein Gas, z.B. ein Erdgas wie LNG (liquefied natural gas), verbrannt, während in einem Flüssigmodus ein geeigneter flüssiger Brennstoff wie Diesel oder Schweröl in demselben Motor verbrannt werden kann.

Mit dem Begriff "Grossdieselmotor" sind im Rahmen dieser Anmeldung auch Multi-Fuel-Grossmotoren, Dual-Fuel Motoren und solche Grossmotoren gemeint, die ausser im Dieselbetrieb, der durch die Selbstzündung des Brennstoffs gekennzeichnet ist, auch in einem Ottobetrieb, der durch die Fremdzündung des Brennstoffs gekennzeichnet ist, oder in Mischformen aus diesen beiden betrieben werden kann. Der Begriff Grossdieselmotor umfasst auch solche Grossmotoren, die alternativ mit mindestens zwei verschiedenen Brennstoffen betrieben werden können, wobei zumindest einer der verschiedenen Brennstoffe geeignet ist, um den Motor in einem Dieselbetrieb zu betreiben.

Moderne Grossdieselmotoren werden üblicherweise vollkommen elektronisch gesteuert und umfassen typischerweise für die Brennstoffeinspritzung ein Common-Rail-System mit einem Druckspeicher für den Brennstoff, um die Zylinder mit dem Brennstoff, also beispielsweise Schweröl oder Dieselöl, zu versorgen. Für jeden Zylinder ist mindestens ein Brennstoffeinspritzventil vorgesehen, um den Brennstoff in den Brennraum des jeweiligen Zylinders einzuspritzen. Häufig sind für jeden Zylinder mehrere, beispielsweise zwei oder drei Brennstoffeinspritzventile, wie zum Beispiel offenbart in US2011/139906A1, vorgesehen. Jedes Brennstoffeinspritzventil ist mit dem Druckspeicher verbunden und umfasst einen Düsenkörper sowie einen Düsenkopf, welcher typischerweise in den Brennraum des Zylinders ragt. Der Düsenkopf, der auch als Zerstäuber bezeichnet wird, umfasst in der Regel mehrere Düsenlöcher, durch welche der Brennstoff in den Brennraum eingespritzt wird. Um den Einspritzvorgang zu beginnen oder zu beenden, ist im Brennstoffeinspritzventil eine bewegliche Düsennadel vorgesehen, welche mit einem Ventilsitz derart zusammenwirkt, dass der Durchgang zu den Düsenlöchern geöffnet oder geschlossen wird. Um einen Einspritzvorgang zu beginnen, wird die Düsennadel durch einen Hub gegen die Kraft einer Feder aus dem Ventilsitz abgehoben, sodass der unter dem Einspritzdruck stehende Brennstoff zu den Düsenlöchern strömen kann. Zum Beenden des Einspritzvorgangs wird die Düsennadel in dichtenden Kontakt mit dem Ventilsitz gebracht, sodass der Durchgang zu den Düsenlöchern verschlossen wird.

Dieser Einspritzvorgang wird elektronisch gesteuert, beispielsweise durch Strombeaufschlagung elektromagnetischer Ansteuerventile, die dann eine entsprechende Hubbewegung der Düsennadel des Brennstoffeinspritzventils verursachen. Nach Beendigung der Einspritzung drückt die Kraft der Feder und die des Betätigungskolbens die Düsennadel wieder in einen dichtenden Kontakt mit dem Ventilsitz.

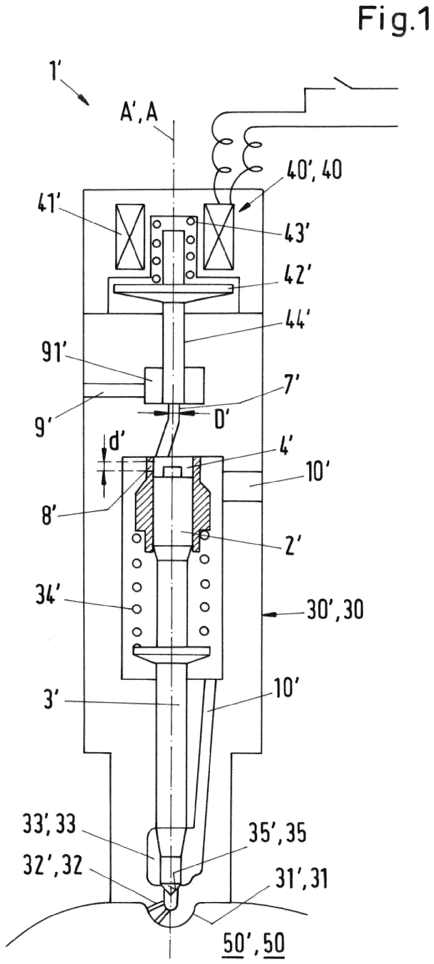

Fig. 1 zeigt in einer Schnittdarstellung eine bekanntes Brennstoffeinspritzventil, mit welcher ein flüssiger und selbstzündender Brennstoff, also beispielsweise Schweröl oder Diesel, in den Brennraum eines Zylinders eines Grossdieselmotors eingebracht werden kann.

Im Rahmen der vorliegenden Anmeldung sind relative Lagebezeichnungen wie "unten", "oben", "unterhalb", "oberhalb", usw. so zu verstehen, dass sie sich jeweils auf die normale Gebrauchslage beziehen.

Fig. 1 zeigt die bekanntes Brennstoffeinspritzventil 1' für einen Grossdieselmotor in einer schematischen Längsschnittdarstellung. Insbesondere ist das Brennstoffeinspritzventil 1' für einen längsgespülten Zweitakt-Grossdieselmotor geeignet. Natürlich ist das Brennstoffeinspritzventil 1' auch für andere Grossmotoren geeignet, beispielsweise für Viertakt-Grossdieselmotoren oder für Grossmotoren, die mit einem anderen flüssigen Brennstoff betreibbar sind.

Fig. 1 stellt das Brennstoffeinspritzventil 1' in seiner normalen Gebrauchslage dar.

Ein Grossdieselmotor umfasst in an sich bekannter Weise eine Mehrzahl von Zylindern, beispielsweise sechs bis zwölf Zylinder oder noch mehr. In jedem Zylinder ist ein Kolben vorgesehen, der jeweils entlang einer Lauffläche des Zylinders zwischen einem oberen und einem unteren Totpunkt hin- und her bewegbar angeordnet ist, und dessen Oberseite gemeinsam mit einem Zylinderdeckel einen Brennraum 50' begrenzt. In den Brennraum 50' wird mittels des Brennstoffeinspritzventils 1' ein Brennstoff, z. B. Schweröl, eingespritzt.

Das Brennstoffeinspritzventil 1' ist Teil eines Einspritzsystems, das beispielsweise als Common-Rail Einspritzsystem ausgestaltet ist. Das Einspritzsystem umfasst für jeden Zylinder mindestens eine, üblicherweise aber mehrere, z. B. zwei oder drei Brennstoffeinspritzventile 1' zum Einspritzen des Brennstoffs in den Brennraum 50', welche üblicherweise im Zylinderdeckel angeordnet sind.

Der Aufbau und die einzelnen Komponenten des Grossdieselmotors, wie beispielsweise Einzelheiten des Einspritzsystems, das Gaswechselsystem, das Abgassystem oder das Turboladersystem für die Bereitstellung der Spül- bzw. Ladeluft, sowie das Kontroll- und Steuerungssystem für den Grossdieselmotor sind dem Fachmann hinlänglich bekannt und bedürfen daher hier keiner weiteren Erläuterung.

Modernen Grossdieselmotoren werden heute vollkommen elektronisch gesteuert und kontrolliert. Eine Motorkontrolleinheit (nicht dargestellt) steuert und überwacht alle Funktionen des Grossdieselmotors, beispielsweise die Betätigung der Auslassventile für den Gaswechsel oder den Einspritzvorgang für den Brennstoff. Die Steuerung bzw. Regelung der verschiedenen Funktionen erfolgt dabei mittels elektrischer oder elektronischer Signale, mit welchen die entsprechenden Komponenten des Motors angesteuert werden. Zudem erhält die Motorkontrolleinheit Informationen von verschiedenen Detektoren, Sensoren oder Messvorrichtungen.

Das Common-Rail Einspritzsystem, welches den Brennraum 50' jedes Zylinders mit Brennstoff, beispielsweise Schweröl, versorgt, umfasst typischerweise einen Druckspeicher (nicht dargestellt), der auch als Akkumulator bezeichnet wird. Der Druckspeicher enthält den Brennstoff unter einem Hochdruck, der im Wesentlichen dem Einspritzdruck entspricht, mit welchem der Brennstoff in den jeweiligen Brennraum 50' eingespritzt wird. Üblicherweise ist der Druckspeicher als ein rohrförmiges Gefäss ausgestaltet, das sich entlang aller Zylinder des Grossdieselmotors erstreckt. Eine oder mehrere Brennstoffpumpen versorgen den Druckspeicher mit Brennstoff unter Hochdruck. Der Druck des Brennstoffs in dem Druckspeicher kann beispielsweise 700-900 bar betragen, aber auch noch höher oder aber auch tiefer sein. Eine Druckerhöhungspumpe (booster pump), die mit einem Vorratsbehälter für den Brennstoff verbunden ist, fördert den Brennstoff zu der oder den Hochdruck-Brennstoffpumpe(n).

Jede der Brennstoffeinspritzventile 1' ist über eine Druckleitung mit dem Druckspeicher verbunden, sodass der unter dem Einspritzdruck stehende Brennstoff aus dem Druckspeicher zu dem Brennstoffeinspritzventil 1' gelangen kann. Zwischen jedem Brennstoffeinspritzventil 1' und dem Druckspeicher kann zudem ein Flussbegrenzungsventil vorgesehen sein, um eine unbeabsichtigte Dauereinspritzung, beispielsweise aufgrund einer Fehlfunktion, zu vermeiden

Im Folgenden wird nun das in Fig. 1 schematisch dargestellte und aus dem Stand der Technik bekanntes Brennstoffeinspritzventil 1' sowie sein Betrieb näher erläutert.

Das Brennstoffeinspritzventil 1' erstreckt sich in einer axialen Richtung A', welche durch die Längsachse des Brennstoffeinspritzventils 1' festgelegt ist, und umfasst einen Düsenkörper 30' sowie einen Düsenkopf 31', der am unteren Ende des Brennstoffeinspritzventils 1' vorgesehen ist und der mit dem Düsenkörper 30' verbunden ist. Der Düsenkopf 31' kann als separates Bauteil ausgestaltet sein, das mit dem Düsenkörper 30' verbunden wird. Alternativ kann der Düsenkopf 31' auch integraler Bestandteil des Düsenkörpers 30' sein. Der Düsenkopf 31' weist mindestens ein Düsenloch 32' auf, typischerweise eine Mehrzahl von Düsenlöchern 32', durch welche(s) der Brennstoff in den Brennraum 50' des Zylinders einbringbar ist. Das Brennstoffeinspritzventil 1' ist beispielsweise am Zylinderdeckel des Zylinders montiert, derart dass der Düsenkopf 31' in den Brennraum 50' des Zylinders hineinragt.

Das Brennstoffeinspritzventil 1' weist ferner eine Brennstoffleitung 10' auf, welche vorzugsweise als Bohrung im Düsenkörper 30' ausgestaltet ist. Die Brennstoffleitung 10' ist mit der Druckleitung (nicht dargestellt) verbindbar, durch welche das Brennstoffeinspritzventil 1' mit dem Druckspeicher (nicht dargestellt) für den Brennstoff verbunden ist, sodass der unter dem Einspritzdruck stehende Brennstoff in die Brennstoffleitung 10' gelangen kann.

Die Brennstoffleitung 10' erstreckt sich bis zu einem Druckraum 33' im Düsenkörper 30', sodass der unter Druck stehende Brennstoff durch die Brennstoffleitung 10' in den Druckraum 33' einbringbar ist. Der Druckraum 33' ist im Wesentlichen ringförmig ausgestaltet.

Das Brennstoffeinspritzventil 1' umfasst ferner eine Düsennadel 3'. Die Düsennadel 3' erstreckt sich in axialer Richtung A' bis in den Druckraum 33' hinein und ist bezüglich der axialen Richtung A' hin- und herbewegbar angeordnet.

Das untere Ende der Düsennadel 3' ist für das Zusammenwirken mit einem ersten Ventilsitz 35' ausgestaltet, welcher unterhalb des Druckraums 33' angeordnet ist und sich an den Druckraum 33' anschliesst, bzw. das untere Ende des Druckraums 33' bildet. Vorzugsweise ist das untere Ende der Düsennadel 3' kegel- oder kegelstumpfförmig ausgestaltet, und der erste Ventilsitz 35' ist ebenfalls kegel- oder kegelstumpfförmig ausgestaltet, derart, dass die Düsennadel 3' und der Ventilsitz 35' dichtend miteinander zusammenwirken können.

In einem geschlossenen Zustand wirkt die Düsennadel 3' dichtend mit dem ersten Ventilsitz 35' zusammen, sodass eine Strömungsverbindung zwischen dem Druckraum 33' und dem Düsenkopf 31' geschlossen ist, und kein Brennstoff aus dem Druckraum 33' in den Düsenkopf 31' gelangen kann. In einem geöffneten Zustand ist durch einen Hub der Düsennadel 3' in axialer Richtung A' (darstellungsgemäss nach oben) die Strömungsverbindung zwischen dem Druckraum 33' und dem Düsenkopf 31' geöffnet, sodass der Brennstoff aus dem Druckraum 33' zwischen der Düsennadel 3' und dem ersten Ventilsitz 35' hindurch in den Düsenkopf 31' und zu den Düsenlöchern 32' strömen kann. Die Düsennadel 3' ist mittels einer Feder 34' federbelastet, wobei die Feder 34' derart angeordnet ist, dass ihre Federkraft in Richtung auf den ersten Ventilsitz 35' gerichtet ist, also die Düsennadel 3' in den ersten Ventilsitz 35' zu drücken versucht.

Zur Betätigung der Düsennadel 3', also zum Wechseln zwischen dem geöffneten und dem geschlossenen Zustand, ist ein Betätigungskolben 2' vorgesehen. Der Betätigungskolben 2' erstreckt sich in Richtung der Längsachse A' und wirkt mit seinem darstellungsgemäss unteren Ende auf die Düsennadel 3' ein, genauer gesagt auf dasjenige Ende der Düsennadel 3', welches dem ersten Ventilsitz 35' abgewandt ist. Es ist natürlich möglich, dass die Düsennadel 3' und der Betätigungskolben 2' einstückig ausgestaltet sind. Das der Düsennadel 3' abgewandte Ende des Betätigungskolbens 2' ist in einer Kontrollkammer 4' aufgenommen, welche zum Bewegen des Betätigungskolbens 2' dient. Mithilfe eines in der Kontrollkammer 4' vorgesehenen Kontrollfluids - üblicherweise ist dies der unter Druck stehende Brennstoff- kann der Betätigungskolben 2' von einer ersten Position in eine zweite Position bewegt werden und umgekehrt. Befindet sich der Betätigungskolben 2' in der ersten Position, so ist die Düsennadel 3' im geöffneten Zustand, befindet sich der Betätigungskolben 2' in der zweiten Position (wie in Fig. 1 gezeigt), so ist die Düsennadel 3' im geschlossenen Zustand.

Die Kontrollkammer 4' ist über eine Öffnungsdrossel 7' mit einem Ringraum 91' verbunden, welcher mit einem Auslass 9' verbunden ist, durch welche das Kontrollfluid zu einer Niederdruckseite abströmen kann, beispielsweise in einen Vorratsbehälter für das Kontrollfluid bzw. den Brennstoff. Auf der Niederdruckseite herrscht beispielsweise Umgebungsdruck oder ein Rückleitungsdruck, der etwas höher ist als der Umgebungsdruck.

Die Kontrollkammer 4' ist ferner über eine Schliessdrossel 8' mit der Brennstoffleitung 10' strömungsverbunden, sodass der unter Hochdruck stehende Brennstoff aus der Brennstoffleitung 10' in die Kontrollkammer 4' einströmen kann. Die Schliessdrossel 8' weist einen Durchmesser d' auf, welcher kleiner ist als der Durchmesser D' der Öffnungsdrossel 7'.

Ferner ist ein elektromagnetisches Betätigungsorgan 40' vorgesehen, mit welchem der Durchgang durch die Öffnungsdrossel 7' geöffnet und verschlossen werden kann. Das elektromagnetische Betätigungsorgan 40' ist vorzugsweise von der Motorkontrolleinheit ansteuerbar. Bei der in Fig. 1 dargestellten Ausführungsform umfasst das elektromagnetische Betätigungsorgan 40' eine Spule 41' sowie einen Anker 42'. Der Anker 42' ist mit einer im Wesentlichen stabförmigen Nadel 44' ausgestaltet und derart angeordnet, dass die Nadel 44' mit ihrem axialen Ende den Durchgang durch die Öffnungsdrossel 7' freigeben oder verschliessen kann. Der Anker 42' ist durch eine Ankerfeder 43' gegen die Öffnungsdrossel 7' vorgespannt, sodass im stromlosen Zustand der Spule 41' der Anker 42' mit der Nadel 44' gegen die Mündung der Öffnungsdrossel 7' in den Ringraum 91' gepresst wird und somit den Durchgang durch die Öffnungsdrossel 7' dichtend verschliesst.

Das Brennstoffeinspritzventil 1' funktioniert wie folgt. Solange keine Einspritzung in den Brennraum 50' des Zylinders erfolgen soll, wird die Spule 41' des elektromagnetischen Betätigungsorgans 40' nicht mit Energie beaufschlagt. Folglich drückt die Ankerfeder 43' den Anker 42' mit der Nadel 44' in dichtenden Kontakt mit der Öffnungsdrossel 7', sodass das Kontrollfluid - hier der unter Druck stehende Brennstoff - nicht durch die Öffnungsdrossel 7' aus der Kontrollkammer 4' abströmen kann. Da die Kontrollkammer 4' über die Schliessdrossel 8' mit der Brennstoffleitung 10' strömungsverbunden ist, herrscht in der Kontrollkammer 4' ein hoher Druck. Der Wert dieses hohen Drucks hängt insbesondere vom Druck des Brennstoffs in der Brennstoffleitung 10' ab. Der Betätigungskolben 2' ist insbesondere so bemessen, dass der hohe Druck in der Kontrollkammer 4' zusammen mit der von der Feder 34' ausgeübten Kraft ausreicht, um die Düsennadel 3' dichtend in den ersten Ventilsitz 35' zu pressen, sodass kein Brennstoff aus dem Druckraum 33' in den Brennraum 50' einströmen kann. Die Öffnungsdrossel 7' und die Schliessdrossel 8' sind so bemessen, dass sie die Bewegung der Düsennadel 3' in beide Richtungen optimal steuern und im Wesentlichen die Öffnungs- und die Schliessgeschwindigkeit der Düsennadel 3' definieren.

Zum Beginnen eines Einspritzvorgangs wird die Spule 41' des elektromagnetischen Betätigungsorgans 40' mit Strom beaufschlagt und verursacht dadurch eine darstellungsgemäss aufwärts gerichtete Hubbewegung des Ankers 42' gegen die Federkraft der Ankerfeder 43'. Dadurch wird der Durchgang durch die Öffnungsdrossel 7' geöffnet, sodass jetzt das Kontrollfluid - hier der Brennstoff - aus der Kontrollkammer 4' durch die Öffnungsdrossel 7' in den Ringraum 91' und von dort durch den Auslass 9' auf die Niederdruckseite abströmen kann. Zwar kann durch die Schliessdrossel 8' unter Druck stehender Brennstoff aus der Brennstoffleitung 10' in die Kontrollkammer 4' nachströmen, aber aufgrund des grösseren Durchmessers D' der Öffnungsdrossel 7' fällt der Druck in der Kontrollkammer 4' auf einen niedrigeren Druck ab. Die Öffnungsdrossel 7' ist dabei so ausgestaltet, dass der Wert des niedrigeren Drucks in der Kontrollkammer 4' und dadurch die Kraft des Betätigungskolbens zusammen mit der Federkraft der Feder 34' nicht mehr ausreicht, um die Düsennadel 3' im geschlossenen Zustand zu halten. Durch den im Druckraum 33' herrschenden Druck wird die Düsennadel 3' aus dem ersten Ventilsitz 35' heraus in den geöffneten Zustand gehoben, sodass nun der Brennstoff aus dem Druckraum 35' in den Düsenkopf 31' und von dort durch die Düsenlöcher 32' in den Brennraum 50' strömen kann. Folglich beginnt die Einspritzung.

Zur Beendigung der Einspritzung wird die Stromversorgung der Spule 41' des elektromagnetischen Betätigungsorgans 40' beendet. Folglich bewegt sich der Anker 42' aufgrund der Federkraft der Ankerfeder 43' darstellungsgemäss nach unten und die Nadel 44' verschliesst dadurch den Durchgang durch die Öffnungsdrossel 7', sodass kein Brennstoff mehr durch die Öffnungsdrossel 7' zum Auslass 9' abströmen kann. Da die Schliessdrossel 8' nach wie vor geöffnet ist, strömt weiterhin unter Hochdruck stehender Brennstoff aus der Brennstoffleitung 10' durch die Schliessdrossel 8' in die Kontrollkammer 4' ein, sodass hier der Druck wieder auf den Wert des hohen Drucks ansteigt. Folglich wird die Düsennadel 3' durch die hydraulische Kraft auf den Betätigungskolben 2' und die Kraft der Feder 34' dichtend in den ersten Ventilsitz 35' gepresst, und der Einspritzvorgang ist beendet.

Obwohl sich derartige Brennstoffeinspritzventile 1' für Grossdieselmotoren in der Praxis bewährt haben, besteht noch Verbesserungsbedarf.

Eines der Probleme ist der hohe Verschleiss an Komponenten des Brennstoffeinspritzventils 1'. Während des Einspritzvorgangs ist die Schliessdrossel 8' ständig offen und auch die Öffnungsdrossel 7' ist geöffnet, sodass der gesamte Druckabfall von dem Hochdruck in der Brennstoffleitung 10' bis zu dem Niederdruck im Auslass 9' über die Schliessdrossel 8' und die Öffnungsdrossel 7' erfolgt. Die Öffnungsdrossel 7' und die Schliessdrossel 8' stehen in einem für die Funktion des Brennstoffeinspritzventils 1' optimalen Verhältnis zueinander. Dies führt zu einer extrem hohen Strömungsgeschwindigkeit insbesondere durch die Schliessdrossel 8' aber auch durch die Öffnungsdrossel 7'. Aufgrund des verhälnismässig grossen, wegen des Öffnungs- bzw. Schliessverhaltens des Brennstoffeinspritzventils 1' in einem optimalen Verhältnis stehenden Durchmessers d' der Schliessdrossel 8' ist die Strömungsgeschwindigkeit des Brennstoffs durch die Öffnungsdrossel 7' sehr hoch, was zu einem verstärkten Verschleiss führt, der sich insbesondere auch im Bereich zwischen dem Ausgang der Öffnungsdrossel 8' und der Spitze der Nadel 44' des Ankers 42' der elektromagnetischen Betätigungsvorrichtung 40' zeigt. Dies ist besonders kritisch, weil dieser Bereich einen Dichtbereich darstellt.

Der Verschleiss an den durchströmten Komponenten des Brennstoffeinspritzventil 1' ist insbesondere von der Strömungsgeschwindigkeit des Brennstoffs durch diese Komponenten abhängig sowie von der Durchflusszeit - also die Dauer der Einspritzung, von der Masse des durchströmenden Brennstoffs und von den im Brennstoff vorhandenen Partikeln, um nur ein paar Beispiele zu nennen. Dieser Verschleiss wird insbesondere durch Abrasion oder Erosion verursacht,

Insbesondere der Verschleiss an und in der Öffnungsdrossel 7' sowie an dem mit der Öffnungsdrossel 7' zusammenwirkenden Ende der Nadel 44' des Ankers 42' kann auch dazu führen, dass sich der Beginn, die Dauer und das Ende der Einspritzung verschieben können, wodurch der wirtschaftliche und effiziente Betrieb und die Thermodynamik des Grossmotors zumindest gefährdet wird, weil durch den Verschleiss bedingt, die von der Motorkontrolleinheit vorgegebenen Beginn- und Endzeitpunkte der Einspritzung und damit die Dauer der Einspritzung nicht mehr mit den realen Werten übereinstimmen. Zudem ist es möglich, dass die Öffnungsdrossel 7' nicht mehr dichtend verschlossen werden kann. Dies führt zu einer unerwünschten Leckage zu den Zeiten, zu denen keine Einspritzung erfolgt.

Dieser Problematik widmet sich die vorliegende Erfindung.

Ausgehend von diesem Stand der Technik ist es daher eine Aufgabe der Erfindung, ein Brennstoffeinspritzventil für einen Grossdieselmotor vorzuschlagen, welche einen deutlich verringerten Verschleiss aufweist. Ferner ist es eine Aufgabe der Erfindung, einen entsprechenden Grossdieselmotor vorzuschlagen.

Die diese Aufgabe lösenden Gegenstände der Erfindung sind durch die Merkmale des unabhängigen Anspruchs der jeweiligen Kategorie gekennzeichnet.

Erfindungsgemäss wird also ein Brennstoffeinspritzventil für einen Grossdieselmotor vorgeschlagen, mit einem Düsenkopf, welcher mindestens ein Düsenloch aufweist, durch welches ein Brennstoff in einen Brennraum einbringbar ist, mit einer Brennstoffleitung, durch welche der Brennstoff unter einem Hochdruck in einen Druckraum einbringbar ist, mit einer Düsennadel, welche mit einer Feder belastet ist, mit einem ersten Ventilsitz, welcher zum Zusammenwirken mit der Düsennadel ausgestaltet ist, derart, dass in einem geöffneten Zustand der Düsennadel eine Strömungsverbindung zwischen dem Druckraum und dem Düsenkopf geöffnet ist, und dass in einem geschlossenen Zustand die Düsennadel dichtend mit dem ersten Ventilsitz zusammenwirkt, sodass die Strömungsverbindung zwischen dem Druckraum und dem Düsenkopf geschlossen ist, mit einem bewegbaren Betätigungskolben, welcher dafür ausgestaltet ist, durch eine Hubbewegung die Düsennadel aus dem geöffneten Zustand in den geschlossenen Zustand zu bewegen, sowie mit einer Kontrollkammer zum Bewegen des Betätigungskolbens von einer ersten Position, in welcher die Düsennadel im geöffneten Zustand ist, in eine zweite Position, in welcher die Düsennadel im geschlossenen Zustand ist, wobei die Kontrollkammer ein Ende des Betätigungskolbens aufnimmt, und wobei eine Zwischenkammer vorgesehen ist, welche über eine verschliessbare Strömungsverbindung mit der Kontrollkammer verbindbar ist, wobei das Ende des Betätigungskolbens als Schliesskörper ausgestaltet ist, welcher die Strömungsverbindung zwischen der Kontrollkammer und der Zwischenkammer verschliesst, wenn sich der Betätigungskolben in der ersten Position befindet, wobei eine verschliessbare Öffnungsdrossel vorgesehen ist, mit welcher die Zwischenkammer mit einem Auslass für den Brennstoff verbindbar ist, wobei eine erste Schliessdrossel vorgesehen ist, welche die Kontrollkammer mit der Brennstoffleitung verbindet, wobei eine zweite Schliessdrossel vorgesehen ist, welche die Zwischenkammer mit der Brennstoffleitung verbindet, und wobei der Durchmesser der zweiten Schliessdrossel kleiner ist als der Durchmesser der ersten Schliessdrossel.

Die erfindungsgemässe Ausgestaltung mit zwei Schliessdrosseln mit unterschiedlichem Durchmesser führt zu einer deutlichen Reduzierung des Verschleisses und somit zu einer wesentlich längeren Betriebslebensdauer mit optimaler, unveränderter Funktion des Brennstoffeinspritzventils. Während des Einspritzvorgangs kann nämlich die erste Schliessdrossel, also diejenige, welche den grösseren Durchmesser hat, verschlossen werden, sodass die unter Hochdruck stehende Kontrollflüssigkeit, also beispielsweise der Brennstoff, nur noch über die zweite Schliessdrossel und die Zwischenkammer abströmen kann.

Da die zweite Schliessdrossel einen kleineren Durchmesser hat als die erste Schliessdrossel, ist der Druckabfall über die zweite Schliessdrossel deutlich grösser, was zwei positive Effekte hat. Zum einen wird durch die zweite Schliessdrossel die Strömungsgeschwindigkeit der Kontrollflüssigkeit stromabwärts der zweiten Schliessdrossel aufgrund des kleinen Durchmessers ganz erheblich reduziert - verglichen mit der Geschwindigkeit stromabwärts einer Drossel mit grösserem Durchmesser. Folglich strömt die Kontrollflüssigkeit mit deutlich geringerer Geschwindigkeit durch die Zwischenkammer ab, was zu einem deutlich reduzierten Verschleiss an den durchströmten bzw. umströmten Komponenten, wie beispielsweise der Öffnungs- und der Schliessdrossel oder der Nadel des Ankers eines elektromagnetischen Betätigungsorgans, führt. Eine geringere Strömungsgeschwindigkeit des Brennstoffs bzw. der Kontrollflüssigkeit führt allgemein zu einem geringeren Verschleiss. Zum anderen wird durch den kleineren Durchmesser der zweiten Schliessdrossel auch die Menge des während des Einspritzvorgangs durch den Auslass abströmenden Brennstoffs ganz erheblich reduziert, was die Energieeffizienz des Motors beträchtlich verbessert. Je weniger von dem unter Hochdruck stehenden Brennstoff ungenutzt auf die Niederdruckseite abströmt, umso besser wird die Energiebilanz.

Mit bekannten Brennstoffeinspritzventilen kann gerade im Teillastbetrieb oder bei niedriger Last der Anteil des ungenutzt abströmenden Brennstoffs, der von dem Hochdruck auf den Niederdruck entspannt wird, bei 30%-40% der eingespritzten Menge liegen, was aus energetischen Gründen natürlich nicht befriedigend ist. Hier bietet das erfindungsgemässe Brennstoffeinspritzventil ganz bedeutende Vorteile.

Durch die erfindungsgemässe Ausgestaltung mit einer ersten und einer zweiten Schliessdrossel, wobei die zweite Schliessdrossel einen kleineren Durchmesser hat als die erste, lässt sich also während des Einspritzvorgangs sowohl die Menge als auch die Geschwindigkeit des durch den Auslass abströmenden Brennstoffs deutlich reduzieren. Dies führt zu einer erheblichen Reduzierung des Verschleisses und zu einer zeitlich gesehen deutlich längeren Stabilität des Einspritzprozesses und damit zu einer verlängerten Betriebsdauer.

Gemäss einer bevorzugten Ausgestaltung verschliesst der Betätigungskolben die erste Schliessdrossel vollständig, wenn sich der Betätigungskolben in der ersten Position befindet. So kann der Brennstoff nur noch über die zweite Schliessdrossel zum Auslass abströmen.

Ferner ist eine Ausgestaltung bevorzugt, bei welcher die Summe aus der Strömungsquerschnittsfläche mit dem Durchmesser der ersten Schliessdrossel und der Strömungsquerschnittsfläche mit dem Durchmesser der zweiten Schliessdrossel kleiner ist als die Strömungsquerschnittsfläche mit dem Durchmesser der Öffnungsdrossel.

Bevorzugt ist der Durchmesser der zweiten Schliessdrossel mindestens zweimal und vorzugsweise mindestens viermal kleiner ist als der Durchmesser der ersten Schliessdrossel. Mit dem Durchmesser der Schliessdrossel ist diejenige Abmessung gemeint, welche den Strömungsquerschnitt bzw. die Strömungsquerschnittsfläche der Schliessdrossel bestimmt, welcher dem Fluid zur Durchströmung der Schliessdrossel zur Verfügung steht.

Besonders bevorzugt ist der Durchmesser der zweiten Schliessdrossel mindestens zehnmal kleiner als der Durchmesser der ersten Schliessdrossel.

In einer bevorzugten Ausgestaltung umfasst die verschliessbare Strömungsverbindung zwischen der Kontrollkammer und der Zwischenkammer einen zweiten Ventilsitz, wobei das Ende des Betätigungskolbens zum dichtenden Zusammenwirken mit dem zweiten Ventilsitz ausgestaltet ist.

Gemäss einer bevorzugten Ausführungsform ist die Öffnungsdrossel so ausgestaltet, dass sie in Richtung einer Längsachse des Brennstoffeinspritzventils durchströmbar ist.

Gemäss einer anderen bevorzugten Ausführungsform ist die Öffnungsdrossel so ausgestaltet, dass sie senkrecht zu einer Längsachse des Brennstoffeinspritzventils durchströmbar ist.

Vorzugsweise ist ein elektromagnetisches Betätigungsorgan zum Öffnen und Schliessen der Öffnungsdrossel vorgesehen.

Das elektromagnetische Betätigungsorgan umfasst dabei vorzugsweise eine Spule und einen Anker, mit einer Nadel, wobei die Nadel, welche in den Anker integriert oder auch lose ist, den Durchgang durch die Öffnungsdrossel verschliesst, solange die Spule nicht mit elektrischer Energie beaufschlagt wird.

In einer bevorzugten Ausführungsform ist die Spule koaxial zu einer Längsachse des Brennstoffeinspritzventils angeordnet.

In einer anderen bevorzugten Ausführungsform ist die Spule parallel zu einer Längsachse des Brennstoffeinspritzventils angeordnet.

Natürlich sind auch solche Ausführungsformen möglich, bei welchen die Spule eine andere Orientierung relativ zur Längsachse des Brennstoffeinspritzventils hat. Beispielsweise kann die Achse der Spule mit der Längsachse einen spitzen oder einen stumpfen Winkel einschliessen oder eine andere beliebige Orientierung aufweisen.

Durch die Erfindung wird ferner ein Grossdieselmotor vorgeschlagen, welcher ein Brennstoffeinspritzventil umfasst, welche erfindungsgemäss ausgestaltet ist.

Vorzugsweise ist der Grossdieselmotor als längsgespülter Zweitakt-Grossdieselmotor ausgestaltet.

Insbesondere kann der Grossdieselmotor auch als Multi-Fuel Motor ausgestaltet sein, der mit mindestens zwei unterschiedlichen Brennstoffen betreibbar ist.

Im Speziellen kann der Grossdieselmotor auch als Dual-Fuel Grossdieselmotor ausgestaltet sein der in einem Flüssigmodus betreibbar ist, in welchem ein flüssiger Brennstoff zur Verbrennung in den Brennraum eingebracht wird, und der ferner in einem Gasmodus betreibbar ist, in welchem ein Gas als Brennstoff in den Brennraum eingebracht wird.

Dabei kann der Grossdieselmotor während des Betriebs von dem Flüssigmodus in den Gasmodus umgeschaltet werden und umgekehrt.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der Zeichnung zeigt:
- Fig. 1:: eine schematische Längsschnittdarstellung eines aus dem Stand der Technik bekannten Brennstoffeinspritzventils,
- Fig. 2:: eine schematische Längsschnittdarstellung eines ersten Ausführungsbeispiels eines erfindungsgemässen Brennstoffeinspritzventils, und
- Fig. 3:: eine schematische Längsschnittdarstellung eines zweiten Ausführungsbeispiels eines erfindungsgemässen Brennstoffeinspritzventils.

Fig. 1 zeigt in einer schematischen Schnittdarstellung ein bekanntes Brennstoffeinspritzventil 1', mit welchem ein flüssiger und selbstzündender Brennstoff, also beispielsweise Schweröl oder Diesel, in den Brennraum 50' eines Zylinders eines Grossdieselmotors eingebracht werden kann.

Da Fig. 1 schon ausführlich als Stand der Technik beschrieben wurde, bedarf es zu Fig. 1 keiner weiteren Erläuterungen. Um den Stand der Technik besser von den Ausführungsbeispielen der Erfindung unterscheiden zu können, werden für die Komponenten, welche zum Stand der Technik gehören, Bezugszeichen verwendet, die mit einem Hochkomma versehen sind. Einige der Komponenten der erfindungsgemässen Ausführungsbeispiele können in identischer Weise oder in sinngemäss gleicher Weise ausgestaltet sein, wie im Stand der Technik. Solche Komponenten sind in Fig. 1 sowohl mit einem Bezugszeichen mit Hochkomma als auch mit dem gleichen Bezugszeichen ohne Hochkomma versehen. Bei der folgenden Beschreibung der erfindungsgemässen Ausführungsbeispiele wird nur auf die Unterschiede zum Stand der Technik detaillierter eingegangen. Die übrigen Erläuterungen zu Fig. 1 gelten in gleicher Weise oder in sinngemäss gleicher Weise auch für die erfindungsgemässen Ausführungsbeispiele.

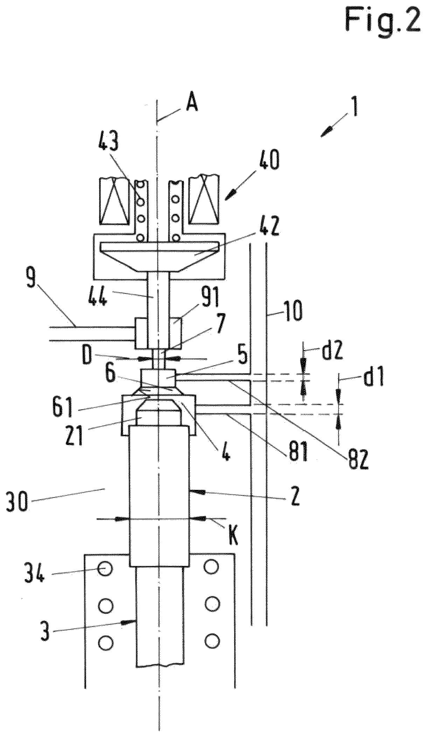

Fig. 2 zeigt eine schematische Längsschnittdarstellung eines ersten Ausführungsbeispiels ein erfindungsgemässes Brennstoffeinspritzventil, die gesamthaft mit dem Bezugszeichen 1 bezeichnet ist. Mit dem Bezugszeichen A ist die Längsachse A des Brennstoffeinspritzventils 1 bezeichnet.

Das Brennstoffeinspritzventil 1 umfasst in an sich bekannter Weise einem Düsenkopf 31 (Fig. 1), welcher mindestens ein Düsenloch 32 aufweist, vorzugsweise aber mehrere Düsenlöcher 32, durch welche ein flüssiger Brennstoff in einen Brennraum 50 eines Zylinders eines nicht näher dargestellten Grossdieselmotors einbringbar ist. Der Brennstoff ist beispielsweise Schweröl oder ein Dieselöl.

Das Brennstoffeinspritzventil 1 umfasst eine Brennstoffleitung 10, durch welche der Brennstoff unter einem Hochdruck in einen Druckraum 33 einbringbar ist. Die Brennstoffleitung 10 ist vorzugsweise mit einem Druckspeicher (Akkumulator) eines Common-Rail-Systems verbunden, in welchem der Brennstoff unter dem Hochdruck bereitgestellt wird. Das Brennstoffeinspritzventil 1 umfasst ferner eine sich in Richtung der Längsachse erstreckende Düsennadel 3, die in einem Düsenkörper 30 angeordnet ist Das darstellungsgemäss untere Ende der Düsennadel 3 ist für das Zusammenwirken mit einem ersten Ventilsitz 35 ausgestaltet (Fig. 1), welcher unmittelbar unterhalb des Druckraums 33 angeordnet ist. Die Düsennadel 3 ist mit einer Feder 34 federbelastet, welche auf die Düsennadel 3 eine darstellungsgemäss (Fig. 2) nach unten wirkende Kraft ausübt, sodass die Federkraft die Düsennadel 3 in den ersten Ventilsitz 35 zu drücken versucht. In einem geöffneten Zustand der Düsennadel 3 ist diese aus dem Ventilsitz 35 herausgehoben, sodass eine Strömungsverbindung zwischen dem Druckraum 33 und dem Düsenkopf 31 geöffnet ist. In einem geschlossenen Zustand ist die Düsennadel 3 in den ersten Ventilsitz 35 gepresst und wirkt dichtend mit dem ersten Ventilsitz 35 zusammen, sodass die Strömungsverbindung zwischen dem Druckraum 33 und dem Düsenkopf 31 geschlossen ist.

Zur Betätigung der Düsennadel 3 ist ein Betätigungskolben 2 vorgesehen, welcher an der darstellungsgemäss oberen Endfläche des Düsenkörpers 3 angeordnet ist und sich in Richtung der Längsachse A bis zu einem Ende 21 erstreckt. Der Betätigungskolben 2 kann einstückig mit der Düsennadel 3 oder auch als separates Bauteil ausgestaltet sein, Der Betätigungskolben 2 ist dafür ausgestaltet, durch eine Hubbewegung in Richtung der Längsachse A die Düsennadel 3 aus dem geöffneten Zustand in den geschlossenen Zustand zu bewegen, bzw. aus dem geschlossenen Zustand in den geöffneten Zustand zu bewegen. Um die Bewegung des Betätigungskolbens 2 zu verursachen, ist eine zylindrische Kontrollkammer 4 vorgesehen, welche das Ende 21 des Betätigungskolbens 2 aufnimmt. Der Innendurchmesser der Kontrollkammer ist so bemessen, dass er im Wesentlichen dem Aussendurchmesser K des Betätigungskolbens 2 entspricht oder etwas grösser als dieser Aussendurchmesser K ist. Das Ende 21 des Betätigungskolbens 2, welches von der Kontrollkammer 4 aufgenommen wird, ist vorzugsweise als Schliesskörper 21 ausgestaltet und hat einen kleineren Durchmesser als der Rest des Betätigungskolbens 2. Das als Schliesskörper 21 ausgestaltete Ende des Betätigungskolbens 2 umfasst einen konischen oder kegelstumpfförmigen oder sphärischen Teil, welcher für das dichtende Zusammenwirken mit einem zweiten Ventilsitz 61 ausgestaltet ist.

Mit Hilfe der Kontrollkammer 4 kann der Betätigungskolben 2 von einer ersten Position, in welcher die Düsennadel 3 im geöffneten Zustand ist, in eine zweite Position bewegt werden, in welcher die Düsennadel 3 im geschlossenen Zustand ist. Mittels der Kontrollkammer 4 kann der Betätigungskolben 2 auch aus der zweiten Position in die erste Position bewegt werden.

Darstellungsgemäss oberhalb der Kontrollkammer 4 ist eine Zwischenkammer 5 vorgesehen, welche über eine verschliessbare Strömungsverbindung 6 mit der Kontrollkammer 4 verbindbar ist. Die Strömungsverbindung 6 umfasst den zweiten Ventilsitz 61, welcher für das dichtende Zusammenwirken mit dem als Schliesskörper 21 ausgestalteten Ende des Betätigungskolbens 2 ausgestaltet ist. Befindet sich der Betätigungskolben 2 in der ersten Position, so liegt der Schliesskörper 21 dichtend in dem zweiten Ventilsitz 61, und die Strömungsverbindung 6 zwischen der Kontrollkammer 4 und der Zwischenkammer 5 ist verschlossen. Befindet sich der Betätigungskolben 2 in der zweiten Position, so ist der Schliesskörper 21 aus dem zweiten Ventilsitz 61 herausgehoben und die Strömungsverbindung 6 zwischen der Zwischenkammer 5 und der Kontrollkammer 4 ist geöffnet. Fig. 2 zeigt den Betätigungskolben 2 in der zweiten Position.

Die Zwischenkammer 5 ist über eine verschliessbare Öffnungsdrossel 7 mit einem Ringraum 91 verbunden, von welchen ein Auslass 9 zu einer Niederdruckseite führt. Die Niederdruckseite kann beispielsweise einen Tank oder einen Sammelbehälter umfassen, in welchem beispielsweise Umgebungsdruck oder ein Rückleitungsdruck herrscht, wobei der Rückleitungsdruck grösser ist als der Umgebungsdruck. Die Öffnungsdrossel 7 erstreckt sich bei dem ersten Ausführungsbeispiel in Richtung der Längsachse A, sodass sie in Richtung der Längsachse A durchströmt wird. Die Öffnungsdrossel 7 hat einen Durchmesser D.

Wenn im Zusammenhang mit Drosseln von einem Durchmesser gesprochen wird, so ist im Rahmen dieser Anmeldung damit jeweils diejenige Abmessung der jeweiligen Drossel gemeint, welche den Strömungsquerschnitt bzw. die Strömungsquerschnittsfläche der Drossel bestimmt, welcher dem Fluid zur Durchströmung der Drossel zur Verfügung steht.

Das Brennstoffeinspritzventil 1 umfasst ferner zwei Schliessdrosseln 81 bzw. 82, nämlich eine erste Schliessdrossel 81, welche die Kontrollkammer 4 mit der Brennstoffleitung 10 verbindet, sowie eine zweite Schliessdrossel 82, welche die Zwischenkammer 5 mit der Brennstoffleitung 10 verbindet. Die erste Schliessdrossel 81 hat einen Durchmesser, der mit d1 bezeichnet wird, und die zweite Schliessdrossel 82 hat einen Durchmesser, der mit d2 bezeichnet wird. Der Durchmesser d2 der zweiten Schliessdrossel 82 ist kleiner als der Durchmesser der ersten Schliessdrossel 81. Die Schliessdrosseln 81 bzw. 82 münden jeweils in die Mantelfläche der Kontrollkammer 4 bzw. der Zwischenkammer 5.

Zum Öffnen und Verschliessen der Öffnungsdrossel 7 ist ein elektromagnetisches Betätigungsorgan 40 vorgesehen, welches eine Spule 41 umfasst, sowie einen Anker 42 mit einer im Wesentlichen stabförmigen Nadel 44, wobei der Anker 42 und die Nadel 44 sowohl einstückig ausgestaltet sein können oder aus separaten, losen Teilen bestehen können. Die Nadel 44 erstreckt sich in Richtung der Längsachse A. Die Spule 41 ist hier koaxial zur Längsachse A angeordnet. Der Anker 42 reicht mit der Nadel 44 in den Ringraum 91 hinein und ist so ausgestaltet, dass die Nadel 44 den Durchgang aus der Zwischenkammer 5 durch die Öffnungsdrossel 7 in den Ringraum 91 verschliesst, wenn die Spule 41 nicht mit elektrischer Energie beaufschlagt wird. Der Anker 42 ist mit einer Ankerfeder 43 federbeaufschlagt, wobei die Ankerfeder 43 den Anker 42 mit der Nadel 44 gegen die Mündung der Öffnungsdrossel 7 in den Ringraum 91 drückt, solange die Spule 41 nicht mit Strom beaufschlagt wird.

Erfindungsgemäss ist der Durchmesser d2 der zweiten Schliessdrossel 82 kleiner als der Durchmesser d1 der ersten Schliessdrossel 81. Vorzugsweise ist der Durchmesser d2 der zweiten Schliessdrossel 82 erheblich kleiner als der Durchmesser d1 der ersten Schliessdrossel 81, beispielsweise mindestens fünfmal kleiner oder mindestens zehnmal kleiner.

Ferner ist es bevorzugt, dass sowohl der Durchmesser d1 der ersten Schliessdrossel 81 als auch der Durchmesser d2 der zweiten Schliessdrossel jeweils kleiner ist als der Durchmesser D der Öffnungsdrossel 7. Besonders bevorzugt sind die Durchmesser d1 und d2 so bemessen, dass die Summe aus der Strömungsquerschnittsfläche mit dem Durchmesser d1 der ersten Schliessdrossel 81 und der Strömungsquerschnittsfläche mit dem Durchmesser d2 der zweiten Schliessdrossel 82 kleiner ist als die Strömungsquerschnittsfläche mit dem Durchmesser D der Öffnungsdrossel 7. Dann ist d1² + d2² < D².

Fig. 2 zeigt den Betätigungskolben 2 in seiner zweiten Position, also in derjenigen Position, in welcher die Düsennadel 3 im geschlossenen Zustand ist. Soll nun ein Einspritzvorgang gestartet werden, so wird die Spule 41 mit Strom beaufschlagt, wodurch der Anker 42 gegen die Kraft der Ankerfeder 43 an die Spule 41 herangezogen wird. Folglich wird der Durchgang durch die Öffnungsdrossel 7 geöffnet und der unter Hochdruck stehende Brennstoff strömt über die Öffnungsdrossel 7 und den Ringraum 91 in den Auslass 9 ab. Durch die Druckabnahme in der Zwischenkammer 5 und der mit ihr in diesem Zustand strömungsverbundenen Kontrollkammer 4 überwiegt die im Druckraum 33 (Fig. 1) durch den Brennstoff bewirkte aufwärtsgerichtete Kraft die Summe aus der Federkraft der Feder 34 und der hydraulischen Kraft, sodass die Düsennadel 3 aus dem ersten Ventilsitz 35 herausgehoben wird und die Einspritzung in den Brennraum beginnt.

Durch diese Aufwärtsbewegung bewegt sich auch der Betätigungskolben 2 darstellungsgemäss aufwärts in seine zweite Position, in welcher der Schliesskörper 21 des Betätigungskolbens 2 dichtend mit dem zweiten Ventilsitz 61 zusammenwirkt, sodass die Strömungsverbindung zwischen der Kontrollkammer 4 und der Zwischenkammer 5 verschlossen wird. Folglich kann auch kein Brennstoff mehr durch die erste Schliessdrossel 81 strömen.

Im geöffneten Zustand der Düsennadel 3 - also während des Einspritzvorgangs - kann der unter Hochdruck stehende Brennstoff nur noch über die zweite Schliessdrossel 82 aber nicht mehr über die erste Schliessdrossel 81 zum Auslass 9 abströmen. Da die zweite Schliessdrossel 82 einen Durchmesser d2 hat, der deutlich kleiner ist als der Durchmesser d1 der ersten Schliessdrossel 81, wird zum einen die Geschwindigkeit des zum Auslass 9 strömenden Brennstoffs und zum anderen die Menge des zum Auslass strömenden Brennstoffs im Vergleich zu bekannten Brennstoffeinspritzventilen drastisch reduziert.

Zum Beenden des Einspritzvorgangs wird der Strom durch die Spule 41 abgeschaltet, wodurch der Anker 42 durch die Ankerfeder 43 mit der Nadel 44 gegen die Mündung der Öffnungsdrossel 7 in den Ringraum 91 gedrückt wird und somit den Durchgang durch die Öffnungsdrossel 7 verschliesst. Dadurch baut sich zunächst aufgrund der geöffneten zweiten Schliessdrossel 82 in der Zwischenkammer 5 ein höherer Druck auf, wodurch sich der Betätigungskolben 2 und damit die Düsennadel 3 darstellungsgemäss nach unten bewegen. Sobald diese Bewegung beginnt, wird auch der Durchgang durch die erste Schliessdrossel 81 geöffnet, sodass für das Beenden des Einspritzvorgangs nun beide Schliessdrosseln 81, 82 durchströmt werden können, was zu einem schnellen und präzisen Schliessvorgang führt. Dieser ist beendet, wenn der Betätigungskolben 2 wieder in seiner zweiten Position ist.

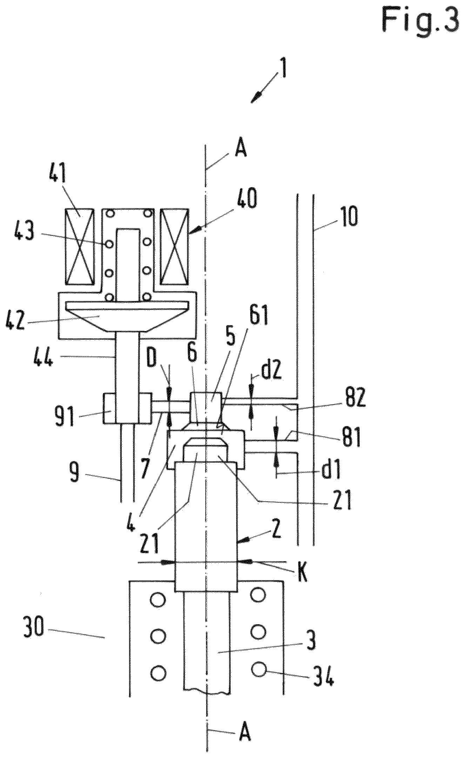

Fig. 3 zeigt in einer zu Fig. 2 analogen Darstellung ein zweites Ausführungsbeispiel eines erfindungsgemässen Brennstoffeinspritzventils 1. Bei der folgenden Beschreibung des zweiten Ausführungsbeispiels wird nur auf die Unterschiede zu dem ersten Ausführungsbeispiel näher eingegangen. Ansonsten gelten die Erläuterungen bezüglich des ersten Ausführungsbeispiels in gleicher Weise oder in sinngemäss gleicher Weise auch für das zweite Ausführungsbeispiel. Bei dem zweiten Ausführungsbeispiel sind gleiche Teile oder von der Funktion her gleichwertige Teile mit den gleichen Bezugszeichen bezeichnet wie bei dem ersten Ausführungsbeispiel.

Bei dem zweiten Ausführungsbeispiel ist der Ringraum 91 seitlich neben der Zwischenkammer 5 und vorzugsweise auf gleicher Höhe wie die Zwischenkammer 5 angeordnet. Somit erstreckt sich die zwischen der Zwischenkammer 5 und dem Ringraum 91 angeordnete Öffnungsdrossel 7 bei dem zweiten Ausführungsbeispiel in Richtung der Längsachse A, sodass sie senkrecht zu der Längsachse A durchströmt wird.

Auch bei dem zweiten Ausführungsbeispiel ist das elektromagnetische Betätigungsorgan 40 vorgesehen, welches die Spule 41 sowie den Anker 42 mit der Nadel 44 umfasst. Die Spule 41 ist parallel zur Längsachse A angeordnet. Der Anker 42 reicht mit der Nadel 44 in den Ringraum 91 hinein und ist so ausgestaltet, dass er den Durchgang aus der Zwischenkammer 5 durch die Öffnungsdrossel 7 in den Ringraum 91 verschliesst, solange die Spule 41 nicht mit elektrischer Energie beaufschlagt wird.

Es versteht sich, dass in sinngemäss gleicher Weise auch solche Ausführungsformen des erfindungsgemässen Brennstoffeinspritzventils möglich sind, bei denen mehr als zwei Schliessdrosseln 81, 82 vorgesehen sind.

## Patentansprüche

1. Brennstoffeinspritzventil für einen Grossdieselmotor, mit einem Düsenkopf (31), welcher mindestens ein Düsenloch (32) aufweist, durch welches ein Brennstoff in einen Brennraum (50) einbringbar ist, mit einer Brennstoffleitung (10), durch welche der Brennstoff unter einem Hochdruck in einen Druckraum (33) einbringbar ist, mit einer Düsennadel (3), welche mit einer Feder (34) belastet ist, mit einem ersten Ventilsitz (35), welcher zum Zusammenwirken mit der Düsennadel (3) ausgestaltet ist, derart, dass in einem geöffneten Zustand der Düsennadel (3) eine Strömungsverbindung zwischen dem Druckraum (33) und dem Düsenkopf (31) geöffnet ist, und dass in einem geschlossenen Zustand die Düsennadel (3) dichtend mit dem ersten Ventilsitz (35) zusammenwirkt, sodass die Strömungsverbindung zwischen dem Druckraum (33) und dem Düsenkopf (31) geschlossen ist, mit einem bewegbaren Betätigungskolben (2), welcher dafür ausgestaltet ist, durch eine Hubbewegung die Düsennadel (3) aus dem geöffneten Zustand in den geschlossenen Zustand zu bewegen, sowie mit einer Kontrollkammer (4) zum Bewegen des Betätigungskolbens (2) von einer ersten Position, in welcher die Düsennadel (3) im geöffneten Zustand ist, in eine zweite Position, in welcher die Düsennadel (3) im geschlossenen Zustand ist, wobei die Kontrollkammer (4) ein Ende (21) des Betätigungskolbens (2) aufnimmt, **dadurch gekennzeichnet, dass** eine Zwischenkammer (5) vorgesehen ist, welche über eine verschliessbare Strömungsverbindung (6) mit der Kontrollkammer (4) verbindbar ist, wobei das Ende des Betätigungskolbens als Schliesskörper (21) ausgestaltet ist, welcher die Strömungsverbindung (6) zwischen der Kontrollkammer (4) und der Zwischenkammer (5) verschliesst, wenn sich der Betätigungskolben (2) in der ersten Position befindet, wobei eine verschliessbare Öffnungsdrossel (7) vorgesehen ist, mit welcher die Zwischenkammer (5) mit einem Auslass (9) für den Brennstoff verbindbar ist, wobei eine erste Schliessdrossel (81) vorgesehen ist, welche die Kontrollkammer (4) mit der Brennstoffleitung (10) verbindet, wobei eine zweite Schliessdrossel (82) vorgesehen ist, welche die Zwischenkammer (5) mit der Brennstoffleitung (10) verbindet, und wobei der Durchmesser (d2) der zweiten Schliessdrossel (82) kleiner ist als der Durchmesser (d1) der ersten Schliessdrossel (81).

2. Brennstoffeinspritzventil nach Anspruch 1, bei welcher der Betätigungskolben (2) die erste Schliessdrossel (81) vollständig verschliesst, wenn sich der Betätigungskolben (2) in der ersten Position befindet.

3. Brennstoffeinspritzventil nach einem der vorangehenden Ansprüche, bei welcher die Summe aus der Strömungsquerschnittsfläche mit dem Durchmesser (d1) der ersten Schliessdrossel (81) und der Strömungsquerschnittsfläche mit dem Durchmesser (d2) der zweiten Schliessdrossel (82) kleiner ist als die Strömungsquerschnittsfläche mit dem Durchmesser (D) der Öffnungsdrossel (7).

4. Brennstoffeinspritzventil nach einem der vorangehenden Ansprüche, bei welcher der Durchmesser (d2) der zweiten Schliessdrossel (82) mindestens zweimal und vorzugsweise mindestens viermal kleiner ist als der Durchmesser (d1) der ersten Schliessdrossel (81).

5. Brennstoffeinspritzdüse nach einem der vorangehenden Ansprüche, bei welcher der Durchmesser (d2) der zweiten Schliessdrossel (82) mindestens zehnmal kleiner ist als der Durchmesser (d1) der ersten Schliessdrossel.

6. Brennstoffeinspritzventil nach einem der vorangehenden Ansprüche, wobei die verschliessbare Strömungsverbindung (6) zwischen der Kontrollkammer (4) und der Zwischenkammer (5) einen zweiten Ventilsitz (61) umfasst, und wobei das Ende (21) des Betätigungskolbens (2) zum dichtenden Zusammenwirken mit dem zweiten Ventilsitz (61) ausgestaltet ist.

7. Brennstoffeinspritzventil nach einem der vorangehenden Ansprüche, wobei die Öffnungsdrossel (7) so ausgestaltet ist, dass sie in Richtung einer Längsachse (A) der Brennstoffeinspritzventil durchströmbar ist.

8. Brennstoffeinspritzventil nach einem der Ansprüche 1 bis 7, wobei die Öffnungsdrossel (7) so ausgestaltet ist, dass sie senkrecht zu einer Längsachse (L) des Brennstoffeinspritzventils durchströmbar ist.

9. Brennstoffeinspritzventils nach einem der vorangehenden Ansprüche, wobei ein elektromagnetisches Betätigungsorgan (40) zum Öffnen und Schliessen der Öffnungsdrossel (7) vorgesehen ist.

10. Brennstoffeinspritzventil nach Anspruch 9, bei welchem das elektromagnetische Betätigungsorgan (40) eine Spule (41) und einen Anker (42) mit einer Nadel (44) umfasst, und wobei die Nadel (44) den Durchgang durch die Öffnungsdrossel (7) verschliesst, solange die Spule (41) nicht mit elektrischer Energie beaufschlagt wird.

11. Brennstoffeinspritzventil nach Anspruche 10, wobei die Spule (41) koaxial zu einer Längsachse (A) des Brennstoffeinspritzventils angeordnet ist.

12. Brennstoffeinspritzventil nach Anspruche 10, wobei die Spule (41) parallel zu einer Längsachse (A) der Brennstoffeinspritzventil angeordnet ist.

13. Grossdieselmotor, **dadurch gekennzeichnet, dass** der Grossdieselmotor ein Brennstoffeinspritzventil (1) umfasst, welche gemäss einem der Ansprüche 1 bis 12 ausgestaltet ist.

14. Grossdieselmotor nach Anspruch 13, ausgestaltet als längsgespülter Zweitakt-Grossdieselmotor.

15. Grossdieselmotor nach einem der Ansprüche 13-14, ausgestaltet als Dual-Fuel Grossdieselmotor, der in einem Flüssigmodus betreibbar ist, in welchem ein flüssiger Brennstoff zur Verbrennung in den Brennraum eingebracht wird, und der ferner in dem Gasmodus betreibbar ist, in welchem ein Gas als Brennstoff in den Brennraum eingebracht wird.

## Claims

1. A fuel injection valve for a large diesel engine, with a nozzle head (31) which has at least one nozzle hole (32) through which a fuel can be introduced into a combustion chamber (50), with a fuel pipe (10) through which the fuel can be introduced under a high pressure into a pressure chamber (33), with a nozzle needle (3) which is loaded with a spring (34), with a first valve seat (35), which is designed to cooperate with the nozzle needle (3) in such a way that, in an open state of the nozzle needle (3), a flow connection between the pressure chamber (33) and the nozzle head (31) is opened, and that, in a closed state, the nozzle needle (3) cooperates in a sealing manner with the first valve seat (35), so that the flow connection between the pressure chamber (33) and the nozzle head (31) is closed, with a movable actuating piston (2), which is designed to move the nozzle needle (3) from the open state to the closed state by a stroke movement, and with a control chamber (4) for moving the actuating piston (2) from a first position, in which the nozzle needle (3) is in the open state, to a second position, in which the nozzle needle (3) is in the closed state, wherein the control chamber (4) receives one end (21) of the actuating piston (2), **characterized in that** an intermediate chamber (5) is provided, which can be connected to the control chamber (4) via a closable flow connection (6), wherein the end of the actuating piston is designed as a closing body (21) which closes the flow connection (6) between the control chamber (4) and the intermediate chamber (5) when the actuating piston (2) is in the first position, wherein a closable opening throttle (7) is provided, with which the intermediate chamber (5) can be connected to an outlet (9) for the fuel, wherein a first closing throttle (81) is provided which connects the control chamber (4) to the fuel pipe (10), wherein a second closing throttle (82) is provided which connects the intermediate chamber (5) to the fuel pipe (10), and wherein the diameter (d2) of the second closing throttle (82) is smaller than the diameter (d1) of the first closing throttle (81).

2. A fuel injection valve according to claim 1, in which the actuating piston (2) completely closes the first closing throttle (81) when the actuating piston (2) is in the first position.

3. A fuel injection valve according to anyone of the preceding claims, in which the sum of the flow cross-sectional area with the diameter (d1) of the first closing throttle (81) and the flow cross-sectional area with the diameter (d2) of the second closing throttle (82) is smaller than the flow cross-sectional area with the diameter (D) of the opening throttle (7).

4. A fuel injection valve according to anyone of the preceding claims, in which the diameter (d2) of the second closing throttle (82) is at least twice and preferably at least four times smaller than the diameter (d1) of the first closing throttle (81).

5. A fuel injection nozzle according to anyone of the preceding claims, in which the diameter (d2) of the second closing throttle (82) is at least ten times smaller than the diameter (d1) of the first closing throttle.

6. A fuel injection valve according to anyone of the preceding claims, wherein the closable flow connection (6) between the control chamber (4) and the intermediate chamber (5) comprises a second valve seat (61), and wherein the end (21) of the actuating piston (2) is designed for sealing cooperation with the second valve seat (61).

7. A fuel injection valve according to anyone of the preceding claims, wherein the opening throttle (7) is designed such that it can be flowed through in the direction of a longitudinal axis (A) of the fuel injection valve.

8. A fuel injection valve according to anyone of the claims 1 to 7, wherein the opening throttle (7) is designed such that it can be flowed through perpendicularly to a longitudinal axis (L) of the fuel injection valve.

9. A fuel injection valve according to anyone of the preceding claims, wherein an electromagnetic actuating member (40) is provided for opening and closing the opening throttle (7).

10. A fuel injection valve according to claim 9, in which the electromagnetic actuating member (40) comprises a coil (41) and an armature (42) with a needle (44), and wherein the needle (44) closes the passage through the opening throttle (7) as long as the coil (41) is not applied with electrical energy.

11. A fuel injection valve according to claim 10, wherein the coil (41) is arranged coaxially with a longitudinal axis (A) of the fuel injection valve.

12. A fuel injection valve according to claim 10, wherein the coil (41) is arranged parallel to a longitudinal axis (A) of the fuel injection valve.

13. A large diesel engine **characterized in that** the large diesel engine comprises a fuel injection valve (1) which is designed according to anyone of the claims 1 to 12.

14. A large diesel engine according to claim 13, designed as a longitudinally scavenged two-stroke large diesel engine.

15. A large diesel engine according to anyone of the claims 13 to 14, designed as a dual-fuel large diesel engine which can be operated in a liquid mode in which a liquid fuel is introduced into the combustion chamber for combustion, and which can be further operated in the gas mode in which a gas is introduced into the combustion chamber as fuel.

## Revendications

1. Une soupape d'injection de carburant pour un grand moteur Diesel, avec une tête de buse (31) qui comporte au moins un trou de buse (32) par lequel un carburant peut être introduit dans une chambre de combustion (50), avec un conduit de carburant (10) par lequel le carburant peut être introduit sous une haute pression dans une chambre de pression (33), avec une aiguille de buse (3) qui est chargée d'un ressort (34), avec un premier siège de soupape (35), qui est conçu pour coopérer avec l'aiguille de buse (3) de telle sorte que, à un état ouvert de l'aiguille de buse (3), une connexion d'écoulement entre la chambre de pression (33) et la tête de buse (31) est ouverte, et que, à un état fermé, l'aiguille de buse (3) coopère de manière étanche avec le premier siège de soupape (35), de telle sorte que la connexion d'écoulement entre la chambre de pression (33) et la tête de buse (31) est fermée, avec un piston d'actionnement mobile (2), qui est conçu pour mouvoir l'aiguille de la buse (3) de l'état ouvert à l'état fermé par un mouvement de levage, ainsi qu'avec une chambre de commande (4) pour mouvoir le piston d'actionnement (2) d'une première position, dans laquelle l'aiguille de buse (3) est à l'état ouvert, à une deuxième position, dans laquelle l'aiguille de buse (3) est à l'état fermé, dans laquelle la chambre de contrôle (4) reçoit une extrémité (21) du piston d'actionnement (2), **caractérisé en ce qu'**une chambre intermédiaire (5) est prévue, qui peut être connectée à la chambre de commande (4) via une connexion d'écoulement fermable (6), dans laquelle l'extrémité du piston d'actionnement est conçue comme un corps de fermeture (21) qui ferme la connexion d'écoulement (6) entre la chambre de commande et la chambre intermédiaire (5) lorsque le piston d'actionnement (2) se trouve dans la première position, dans laquelle un étranglement d'ouverture (7) fermable est prévu, avec lequel la chambre intermédiaire (5) peut être connectée à une sortie (9) pour le carburant, dans laquelle un premier étranglement de fermeture (81) est prévu, qui connecte la chambre de commande (4) à la conduite de carburant (10), dans laquelle un deuxième étranglement de fermeture (82) est prévu, qui connecte la chambre intermédiaire (5) à la conduite de carburant (10), et dans laquelle le diamètre (d2) du deuxième étranglement de fermeture (82) est plus petit que le diamètre (d1) du premier étranglement de fermeture (81).

2. La soupape d'injection de carburant selon la revendication 1, dans laquelle le piston d'actionnement (2) ferme complètement le premier étranglement de fermeture (81) lorsque le piston d'actionnement (2) est dans la première position.

3. La soupape d'injection de carburant selon l'une des revendications précédentes, dans laquelle la somme de la surface de la section d'écoulement avec le diamètre (d1) du premier étranglement de fermeture (81) et de la surface de la section d'écoulement avec le diamètre (d2) du deuxième étranglement de fermeture (82) est plus petite que la surface de la section d'écoulement avec le diamètre (D) de l'étranglement d'ouverture (7).

4. La soupape d'injection de carburant selon l'une des revendications précédentes, dans laquelle le diamètre (d2) du deuxième étranglement de fermeture (82) est au moins deux fois et de préférence au moins quatre fois plus petit que le diamètre (d1) du premier étranglement de fermeture (81).

5. La soupape d'injection de carburant selon l'une des revendications précédentes, dans laquelle le diamètre (d2) du deuxième étranglement de fermeture (82) est au moins dix fois plus petit que le diamètre (d1) du premier étranglement de fermeture.

6. La soupape d'injection de carburant selon l'une des revendications précédentes, dans laquelle la connexion d'écoulement fermable (6) entre la chambre de commande (4) et la chambre intermédiaire (5) comprend un deuxième siège de soupape (61), et dans laquelle l'extrémité (21) du piston d'actionnement (2) est conçue pour coopérer de manière étanche avec le deuxième siège de soupape (61).

7. La soupape d'injection de carburant selon l'une des revendications précédentes, dans laquelle l'étranglement d'ouverture (7) est conçu de manière à pouvoir être traversé dans la direction d'un axe longitudinal (A) de la soupape d'injection de carburant.

8. La soupape d'injection de carburant selon l'une des revendications 1 à 7, dans laquelle l'étranglement d'ouverture (7) est conçu de manière à pouvoir être traversé perpendiculairement à un axe longitudinal (L) de la soupape d'injection de carburant.

9. La soupape d'injection de carburant selon l'une des revendications précédentes, dans laquelle un dispositif d'actionnement électromagnétique (40) est prévu pour ouvrir et fermer l'étranglement d'ouverture (7).

10. La soupape d'injection de carburant selon la revendication 9, dans laquelle le dispositif d'actionnement électromagnétique (40) comprend une bobine (41) et une armature (42) avec une aiguille (44), et dans laquelle l'aiguille (44) ferme le passage à travers l'étranglement d'ouverture (7) tant que la bobine (41) n'est pas alimentée en énergie électrique.

11. La soupape d'injection de carburant selon la revendication 10, dans laquelle la bobine (41) est disposée coaxialement à un axe longitudinal (A) de la soupape d'injection de carburant.

12. La soupape d'injection de carburant selon la revendication 10, dans laquelle la bobine (41) est disposée parallèlement à un axe longitudinal (A) de la soupape d'injection de carburant.

13. Un grand moteur Diesel, **caractérisé en ce que** le grand moteur Diesel comprend une soupape d'injection de carburant (1) qui est conçue selon l'une des revendications 1 à 12.

14. Le grand moteur Diesel selon la revendication 13, conçu comme un grand moteur diesel à deux temps purgé longitudinalement.

15. Le grand moteur Diesel selon l'une des revendications 13 à 14, conçu comme un grand moteur diesel à deux carburants qui peut fonctionner en mode liquide dans lequel un carburant liquide est introduit dans la chambre de combustion pour la combustion, et qui peut en outre fonctionner en mode gazeux dans lequel un gaz est introduit dans la chambre de combustion en tant que carburant.
